# EUROPÄISCHE PATENTSCHRIFT

(11) **EP 2 572 361 B1**
(45) Veröffentlichungstag und Bekanntmachung des Hinweises auf die Patenterteilung: **02.04.2014**
(21) Anmeldenummer: 11722044.2
(22) Anmeldetag: 20.05.2011
(51) Int. Cl.: H01B 7/288

(54) **FÜLLMATERIALKORDEL UND EIN VERFAHREN ZUR HERSTELLUNG DERSELBEN**
FILLER CORD AND A METHOD FOR PRODUCING THE SAME
CORDON EN MATÉRIAU DE REMPLISSAGE ET UN PROCÉDÉ POUR LE FABRIQUER

(30) Priorität: 21.05.2010 DE 102010029233
(43) Veröffentlichungstag der Anmeldung: 27.03.2013
(73) Patentinhaber: GarnTec GmbH, 67468 Neidenfels (DE)
(72) Erfinder: EISPERT, Karl-Heinz, 67659 Kaiserslautern (DE); SCHÖNUNG, Thomas, 67482 Freimersheim (DE)
(74) Vertreter: Schön, Christoph
(86) Internationale Anmeldenummer: PCT/EP2011/058267
(87) Internationale Veröffentlichungsnummer: WO 2011/144740

(56) Entgegenhaltungen:
- EP-A1- 1 577 901
- DE-A1- 19 839 900
- US-A- 3 282 040
- US-B1- 7 411 132

## Beschreibung

Die vorliegende Erfindung betrifft eine Füllmaterialkordel, die sich beispielsweise zur exakten Füllung von Hohlräumen in Kabeln und deren Längswasserabdichtung eignet, sowie ein Verfahren zur Herstellung derselben.

Zurzeit werden in der Kabelindustrie zur Herstellung von längswasserdichten Kabeln als Füllmaterialien hauptsächlich Gelmassen (beispielsweise Jelly), Quellpulver, Quellvliese oder dünne Quellgarne eingesetzt. Bei der Zusammenführung mehrerer Kabelstränge entstehen jedoch konstruktionsbedingt Hohlräume, die geschlossen werden müssen, um bei einem Wassereintritt in das Kabel das Wasser zurückzuhalten und das Kabel abzudichten. Ferner muss bei der Einarbeitung der Füllstoffe darauf geachtet werden, dass durch das Ausfüllen der äußeren Zwickel das Kabel in der richtigen Form gehalten wird. Bei dünneren Kabeln oder bei Kabeln mit kleineren Hohlräumen wurde dies in der Vergangenheit häufig durch den Einsatz von Quellgarnen zu gewährleisten versucht. Bei dicken Kabeln bzw. Kabeln mit großen Hohlräumen konnten jedoch bisher die Höhlräume mit handelsüblichen Füllmaterialien wie z.B. Polypropylengarnen, Polyethylengarnen oder Garnen aus Jute, Sisal oder Papier, nur teilweise geschlossen werden und somit keine gleichmäßige Geometrie des Kabel gewährleistet werden. Darüber hinaus konnten dicke Kabel bzw. Kabel mit großen Hohlräumen nur mit sehr hohem Aufwand durch Zuführung von Quellpulver oder Gelmassen längswasserdicht gemacht werden. Da die meisten Füllmaterialien nicht leitfähig sind, bei manchen Energiekabeln jedoch eine halbleitende oder leitende Füllung empfehlenswert ist, war es bisher somit nicht möglich, alle Anforderungen gleichzeitig zu erfüllen.

Die DE 10 2006 018 536 A1 beschreibt ein optisches Kabel (a) mit einer Kabelseele mit mindestens einem optischen Übertragungselement, das mindestens einen Lichtwellenleiter enthält, (b) mit einer ersten Hülle aus einem Papier enthaltenden Material, wobei die erste Hülle das mindestens eine optische Übertragungselement umgibt, und (c) mit einem Kabelmantel, der die erste Hülle umgibt und ein Material aus einem Kunststoff enthält. Ein solches optisches Kabel krankt jedoch an einer unzureichenden Zwickelfüllung und somit einer nicht ausreichenden Längswasserdichtigkeit.

Die DE 593 444 beschreibt ein elektrisches Hochspannungskabel, worin die äußerste Lage des als Vollseil ausgebildeten Leiterseils als offene Drahtlage verseilt ist und zwischen den Leitungsdrähten der offenen Verseillage billige Füllstoffe aus Papierkordel, Hanfkordel, Pressspan oder auch halbleitende Stoffe, wie Graphitpapier, angeordnet sind, wobei, falls als Füllstoffe der äußersten Lage nicht halbleitende Stoffe dienen, die äußerste Lage des Leitungsseiles mit einer leitenden Hülle umgeben ist.

Die DE 198 39 900 A1 beschreibt Kabel für Fernmelde- und Sicherungsanlagen bei besonderen Einsatzbedingungen, insbesondere für stark schwingungsbeanspruchte Systeme, in besonderer Weise beim Gleisbereich der Bahn für die Legung an der Schiene, bestehend aus Adern, die unter anderem zu Paaren, Vierern oder anderen Verseilgruppen zusammengefasst und von einem Mantel umgeben sind, wobei die isolierten Leiter des Vierers, der Paare oder der anderen Verseilgruppen aus Litzen bestehen und im Zentralbereich ein inneres Dämpfungselement sowie über den isolierten Leitern ein äußeres Dämpfungselement angeordnet ist und die isolierten Leiter so fixiert werden, dass die Adern lose aneinanderliegen und gegebenenfalls mehrere dieser Grundelemente zusammengeführt sind und die in Lagen angeordneten Grundelemente von Dämpfungszwischenelementen umgeben sind und die entsprechende Konfiguration von einem Mantel umhüllt ist. Auch das hier beschriebene Kabel krankt an einer unzureichenden Füllung der Zwickel, da das verwendete Füllmaterial die Geometrie des Kabels nicht ausreichend unterstützt.

Aufgabe der vorliegenden Erfindung ist es folglich ein Füllmaterial bereitzustellen, welches in der Lage ist, alle oben genannten geforderten Eigenschaften hinsichtlich Längswasserdichtigkeit, Leitfähigkeit, Formbarkeit und Einsetzbarkeit in unterschiedlichen Formen von Kabeln zu erfüllen.

Gegenstand der vorliegenden Erfindung ist somit eine Füllmaterialkordel, die einen Kern aus (i) Papier und (ii) anderen, quellfähigen, flächigen oder runden Füllmaterialien, Quellvliesen und/oder Quellgarnen, optional ein Quellvlies als Umhüllung des Kerns sowie Quellgarn, das zur Fixierung des optional eine Umhüllung aufweisenden Kerns um diesen gewickelt ist, umfasst.

Die Längswasserdichtigkeit der erfindungsgemäßen Füllmaterialkordel wird dadurch erreicht, dass das Füllmaterial zu mindestens 20 %, vorzugsweise zu mindestens 50 % aus Materialien besteht, die bei Zutritt von Wasser quellen. Gemäß einer bevorzugten Ausführungsform besteht die erfindungsgemäße Füllmaterialkordel aus vorzugsweise zu 20 - 100 %, stärker bevorzugt zu 70 - 100 %, insbesondere zu 100% aus Materialien besteht, die bei Zutritt von Wasser quellen.

In einer weiteren bevorzugten Ausführungsform weist die erfindungsgemäße Füllmaterialkordel mindestens eine partielle Leitfähigkeit auf. Gemäß einer Ausführungsform weist die erfindungsgemäße Füllmaterialkordel beispielsweise einen Oberflächenwiderstand von ≤ 10⁹ Ω, vorzugsweise ≤ 10⁸ Ω, stärker bevorzugt ≤ 10⁴ Ω, beispielsweise von 1000 bis 2000 Ω und/oder einen Durchgangswiderstand von ≤ 10¹⁰ Ω x cm, vorzugsweise ≤ 10⁹ Ω x cm, stärker bevorzugt ≤ 10⁵ Ω x cm, beispielsweise von ungefähr 1 x 10⁵ bis 1 x 10⁷ Ω x cm auf.

Diese Leitfähigkeit der erfindungsgemäßen Füllmaterialkordel lässt sich erfindungsgemäß erreichen, indem ein leitfähiges quellfähiges Füllmaterial, Quellvlies und/oder Quellgarn verwendet wird. Um ein quellfähiges Füllmaterial leitfähig zu machen, kann beispielsweise dem quellfähigen Füllmaterial Russ und/oder Graphit und/oder ein Metallpulver üblicherweise in Mengen von bis zu 500 Gew.-%, vorzugsweise von bis zu 200 Gew.-%, insbesondere 100 Gew.-%, bezogen auf das Gewicht des das leitende Material enthaltenden anderen quellfähigen flächigen oder runden Füllmaterials, zugesetzt werden.

In einer weiteren Ausführungsform kann das optional um den Kern gewickelte Quellvlies aus leitfähigem oder nicht leitfähigem Quellvlies bestehen. Soll ein leitfähiges Quellvlies eingesetzt werden, kann in das Quellvlies ein leitfähiges Material, wie es oben in Verbindung mit dem quellfähigen Füllmaterial beschrieben wurde, in das Quellvlies eingearbeitet werden. Ebenso kann in einer weiteren Ausführungsform ein leitfähiges Quellgarn erfindungsgemäß eingesetzt werden.

Bei dem erfindungsgemäß verwendbaren Papier kann es sich um ein Papier aus Zellstoff handeln, das üblicherweise auf Papiermaschinen gefertigt wird und eine Grammatur im Bereich von 5 bis 70 g/m2, vorzugsweise 15 bis 50 g/m2, insbesondere 30 bis 40 g/m2 (gemäß DIN-Norm DIN EN ISO 12625-6) aufweist. Beispiele für ein erfindungsgemäß einsetzbares Papier sind die im Handel von der Fa. Glatz erhältlichen Papiere mit der Bezeichnung KR 40 und oder KR 50.

Bei den erfindungsgemäß verwendbaren quellfähigen flächigen oder runden Füllmaterialien kann es sich um solche handeln, die aus Fasern oder Fäden bestehen. Üblicherweise kann es sich um solche aus quellfähigen leitfähigen, halbleitenden oder nicht leitenden Quellvliesen handeln. Vorzugsweise handelt es sich bei den quellfähigen flächigen oder runden Füllmaterialien um im Handel erhältliche preisgünstige Papiere beliebiger Grammatur oder Polyestervliese. Wenn ein quellfähiges flächiges oder rundes Füllmaterial eingesetzt werden soll, das leitfähig ist (z.B. mit einem Oberflächenwiderstand von ungefähr 1000 bis 2000 Ω und/oder einem Durchgangswiderstand von ungefähr 1x10⁵ bis 1x10⁷ Ω x cm), kann dem als quellfähigen flächigen Füllmaterial üblicherweise verwendeten Polymer oder Polymergemisch Russ und/oder Graphit und/oder ein Metallpulver üblicherweise in Mengen von bis zu 500 Gew.-%, vorzugsweise von bis zu 200 Gew.-%, insbesondere 100 Gew.-%, bezogen auf das Gewicht des das leitende Material enthaltenden anderen quellfähigen flächigen oder runden Füllmaterials, zugesetzt werden.

Bei dem erfindungsgemäß verwendbaren Quellvlies kann es sich um ein Vlies aus Stapelfasern, wie Polyolefinfasern, Viskosefasern, Polyesterfasern, Cellulosefasern oder Kombinationen dieser Fasern oder ein Vlies aus Polymerfilamenten handeln. Vorzugsweise ist das Quellvlies aus Polyesterfasern hergestellt. Das erfindungsgemäß verwendete Quellvlies ist üblicherweise hydrophil und besitzt ein Basisgewicht im Bereich von 10 bis 180 g/m², vorzugsweise 30 bis 100 g/m², insbesondere 50 bis 80 g/m². Das erfindungsgemäß verwendete Quellvlies kann in an sich bekannter Weise durch Thermobondierung, Spinbondierung, Schmelzblasen oder ein Entwässerungsverfahren oder durch irgendein anderes an sich bekanntes Verfahren hergestellt werden. Hydrophile Quellvliese, wie sie erfindungsgemäß bevorzugt verwendet werden, bestehen üblicherweise aus hydrophilen Fasern, beispielsweise Polyesterfasern, mit einem Wasserkontaktwinkel von weniger als 90°. In einer weiteren Ausführungsform kann das Vlies aus Stapelfasen, beispielsweise Polyesterfasern mit einem Acrylsäurepolymer, beispielsweise Superabsorberpolymer, beaufschlagt sein. Erfindungsgemäß kann ein leitendes oder nicht leitendes Quellvlies eingesetzt werden. Soll ein leitendes Quellvlies eingesetzt werden, kann in das Quellvlies ein leitendes Material, wie oben in Verbindung mit dem quellfähigen Füllmaterial bereits beschrieben, in das Quellvlies eingearbeitet werden. In einer Ausführungsform kann ein handelsübliches, wie z.B. bei GarnTec erhältliches, leitendes oder halbleitendes Quellvlies verwendet werden (z.B. GTSB 50).

Bei dem erfindungsgemäß verwendbaren Quellgarn kann es sich um ein Garn beliebiger Länge handeln, das z.B. aus ein oder mehreren Polyesterfäden besteht, welche mit einer Quellsubstanz, vorzugsweise einem Superabsorberpolymer, z.B. einem Acrylsäurecopolymer, beaufschlagt sind, und eine Reißfestigkeit von 5 bis 120 N, vorzugsweise 40 bis 80 N, insbesondere 50 bis 60 N aufweist und eine spezifische Wasseraufnahme von mindestens 20 ml/g, idealerweise 35 - 60 ml/g besitzt. Erfindungsgemäß lässt sich beispielsweise ein im Handel von der Fa. GarnTec erhältliches Quellgarn z. B. WPB 5000 verwenden.

Die erfindungsgemäße Füllmaterialkordel besitzt üblicherweise einen Durchmesser von 4 mm bis 140 mm, vorzugsweise 8 bis 80 mm. Die erfindungsgemäße Füllmaterialkordel kann die verschiedensten geometrischen Formen haben, beispielsweise rund, flach, mehrkantig, oval usw.

Üblicherweise liegt in der erfindungsgemäßen Füllmaterialkordel das Verhältnis von (i) Papier zu (ii) dem anderen quellfähigen, flächigen oder runden Füllmaterial, Quellvlies und/oder Quellgarn im Kern in einem Bereich von 20:80 bis 80:20, vorzugsweise 40:60 bis 60:40, insbesondere beträgt das Verhältnis 30:70, bezogen auf das Gewicht der Komponenten.

Das erfindungsgemäß verwendete Gemisch aus (i) Papier und (ii) dem anderen, quellfähigen, flächigen oder runden Füllmaterial, Quellvlies und/oder Quellgarn liegt üblicherweise in Form einer gleichmäßigen Mischung von Streifen der oben genannten Komponenten vor. In einer bevorzugten Ausführungsform der vorliegenden Erfindung ist der Kern aus (i) Papier und (ii) dem anderen quellfahigen, flachigen oder runden Füllmaterial, Quellvlies und/oder Quellgarn von einer Quellvlieslage in Form einer Umhüllung umschlossen. Diese Quellvlieslage kann aus leifähigem, halbleitendem oder nicht leitfähigem Quellvlies bestehen.

Das für die Fixierung der erfindungsgemäßen Füllmaterialkordel verwendete Quellgarn umgibt den Kern aus (i) Papier und (ii) dem anderen, quellfähigen, flächigen oder runden Füllmaterial, Quellvlies und/oder Quellgarn in einer Weise, dass das Quellgarn um den optional eine Umhüllung aufweisenden Kern gewickelt ist und dadurch den Kern fixiert. Die Umwicklung kann erfindungsgemäß in Form eines spiralförmigen oder kreuzweisen Umwickelns mit Quellgarn ausgebildet sein. Der Anteil des Quellgarns, bezogen auf das Gesamtgewicht der erfindungsgemäßen Füllmaterialkordel, beträgt üblicherweise 0,5 bis 40 Gew.-%, vorzugsweise 0,8 bis 20 Gew.-%, insbesondere 1 bis 5 Gew.-%.

Außerdem ist es erfindungsgemäß möglich, die Quelleigenschaften der erfindungsgemäßen Füllmaterialkordel durch Wählen der speziellen Zusammensetzung der verwendeten Komponenten auf die gewünschten Erfordernisse des Produkts, für das es verwendet werden soll, einzustellen. Dadurch können bis Dato für Füllmaterialien für die Kabelproduktion unerreichte Quelleigenschaften von bis zu 160 ml Wasseraufnahme je Gramm bzw. 25 Liter Wasser je Meter der erfindungsgemäßen längswasserabdichtenden Füllmaterialkordel erreicht werden.

Die erfindungsgemäße Füllmaterialkordel weist den Vorteil auf, dass sie aufgrund ihrer Ausbildung variabel an die aufzufüllenden Hohlräume eines Kabels anpassbar ist. Dies lässt sich zum einen dadurch erreichen, dass die erfindungsgemäße Füllmaterialkordel aufgrund ihres Kerns aus Papier und quellfähigem Material geformt wird, wodurch die Füllmaterialkordel bei der Kabelherstellung dergestalt verformbar ist, dass sie die Hohlräume (Zwickel) zwischen den einzelnen Kabelsträngen und der Kabelummantelung gänzlich ausfüllt. Somit lässt sich durch geeignete Wahl der eingearbeiteten Masse an quellfähigem Material der in einem Kabel, beispielsweise einem abgeschirmten Energiekabel, notwendige Gegendruck zum Kabelschirm einstellen. Zum anderen können aufgrund ihres Aufbaus die Abmessungen (insbesondere der Querschnitt) der Füllmaterialkordel beliebig innerhalb der oben angegebenen Grenzen gewählt werden. Dies bietet den Vorteil, dass aus den Vorgaben der Kabelkonstrukteure eine erforderliche Füllmaterialkordel hergestellt werden kann, die an den zu füllenden Kabelhohlraum exakt angepasst ist, so dass insbesondere bei Kabeln mit großem Querschnitt die Hohlräume optimal ausgefüllt werden können. Das gänzliche Ausfüllen der Hohlräume bietet zudem den Vorteil, dass die Geometrie des zu produzierenden Kabels positiv beeinflusst wird. Ein weiterer Vorteil der erfindungsgemäßen Füllmaterialkordel besteht darin, dass aufgrund der geringeren Dichte bzw. Masse erfindungsgemäß eingesetzten quellfähigen Materialien im Vergleich zu denen von herkömmlichen Füllmaterialien das fertige Kabel viel leichter und biegsamer ist, was eine erhebliche Erleichterung und Kostenersparnis beim Verlegen der Kabel mit sich bringt.

Gegenstand der vorliegenden Erfindung ist somit ferner die Verwendung einer erfindungsgemäßen Füllmaterialkordel zur Längswasserabdichtung in Kabeln, wobei gemäß einer Ausführungsform die Füllmaterialkordel dergestalt in Längsrichtung des Kabels angeordnet ist, dass die die vorhandenen Hohlräume im Kabel ausfüllt.

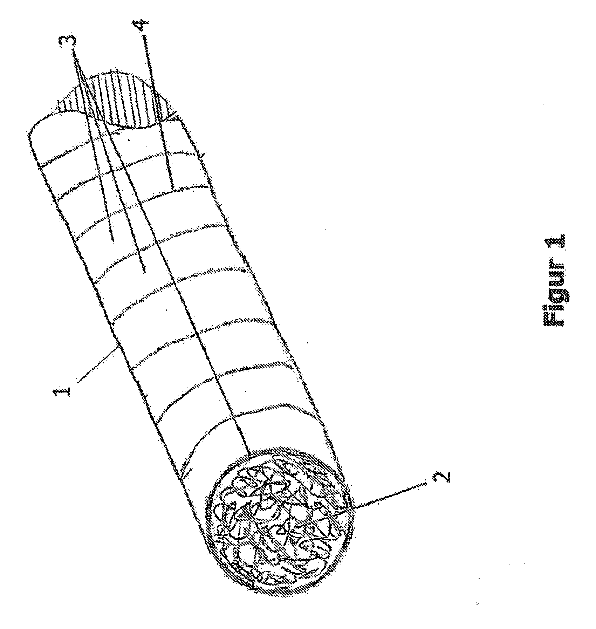

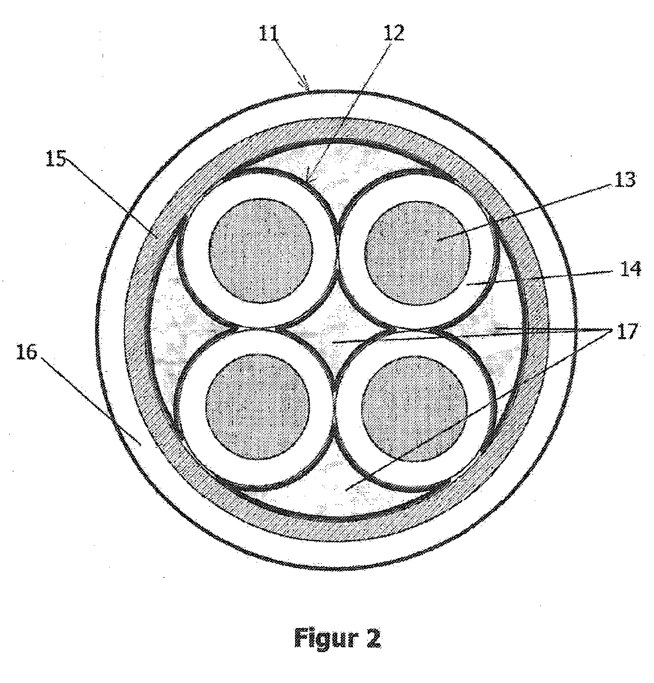

Zum besseren Verständnis ist die vorliegende Erfindung ferner unter Bezugnahme auf die nachfolgenden Figuren 1 und 2 dargestellt. Es zeigen:
Figur 1 in einer räumlichen Darstellung einen Abschnitt eines Ausführungsbeispiels einer erfindungsgemäßen Füllmaterialkordel, und
Figur 2 den Querschnitt eines Ausführungsbeispiels einer Anordnung von erfindungsgemäßen Füllmaterialkordeln in einem Kabel.

In Figur 1 ist ein Ausführungsbeispiel für eine erfindungsgemäße Füllmaterialkordel 1 dargestellt. Im Inneren der Füllmaterialkordel 1 ist der Kern 2 angeordnet, der in dem dargestellten Ausführungsbeispiel aus gepressten Quellvliesstreifen und Tissuepapierstreifen besteht. Um den Kern 2 ist ein Quellvlies 3 gewickelt, das leitend oder nicht leitend ausgebildet sein kann. Der Kern 2 und das Quellvlies 3 sind zur Fixierung mit einem Quellgarn 4 umwickelt.

In der Figur 2 ist ein Kabel 11 dargestellt. Das Kabel 11 besteht aus mehreren Kabelsträngen 12, die neben und übereinander angeordnet sind. Die Kabelstränge 12 weisen einen kreisförmigen Querschnitt auf und bestehen aus Kabelkernen oder Kabelleitern 13 und sind von einer Leiterisolierung 14 umschlossen. Die Kabelstränge 12 sind von einer Trennschicht 15 umgeben, die aus Vlies oder Papier besteht. Um die Trennschicht 15 ist ein Kabelmantel 16 gelegt.

Aufgrund des kreisförmigen Querschnitts der Kabelstränge 12 entstehen bei der Ummantelung der Kabelstränge 12 durch die Trennschicht 15 und den Kabelmantel 16 Hohlräume (Zwlckel) Zwischen den Kabelsträngen 12 und der Trennschicht 15. In die Zwickel sind erfindungsgemäße Füllmaterialkordeln 17 eingelegt, wie z.B. die gemäß dem in Figur 1 dargestellten Ausführungsbeispiel.

Wie aus Figur 2 ersichtlich ist, verformen sich die erfindungsgemäßen Füllmaterialkordeln, die bei ihrer Herstellung einen im wesentlichen runden Querschnitt aufweisen, bei der Herstellung des Kabels 12 dergestalt, dass sie sich den im Kabel vorhandenen Hohlräumen anpassen und diese nahezu gänzlich ausfüllen. Auf diese Weise erfolgt bereits beiHder herstellung des Kabels 12 eine weitgehende längswasserabdichtung der Kabels 12, die bei einem Eindringen von Wasser in das Kabelinnere durch das Aufquellen des quellfähigen Materials in den erfindungsgemäßen Füllmaterialkordeln noch optimiert wird, so dass eine ausgezeichnete Längswasserabdichtung erreicht werden kann.

Nachfolgend wird das Verfahren zur Herstellung der erfindungsgemäßen Füllmaterialkordel kurz beschrieben:
Die erfindungsgemäße Füllmaterialkordel wird entgegen der gängigen Praxis zur Herstellung von Kordeln und Seilen nicht durch Verdrehen (i) des Papier und (ii) des anderen, quellfähigen, flächigen oder runden Füllmaterials, Quellvlieses und/oder Quellgarns hergestellt, sondern durch Hindurchziehen einer Mischung von (i) Papier in Streifenform und (ii) dem anderen, quellfähigen, flächigen oder runden Füllmaterial, Quellvlies und/oder Quellgarn durch eine Düse mit festgelegtem Durchmesser (der Durchmesser der Düse liegt üblicherweise zwischen 4,5 mm und 140,5 mm und somit um 0,5 mm über dem Nenndurchmesser der herzustellenden erfindungsgemäßen Füllmaterialkordel) und anschließendes sofortiges Fixieren des erreichten Durchmessers durch Umwickeln mit dem Quellgarn. Im Falle des Hindurchziehens einer Mischung von (i) Papier und (ii) dem anderen, quellfähigen, flächigen oder runden Füllmaterial, Quellvlies und/oder Quellgarn, die von Quellvlies umschlossen werden soll, wird noch vor dem Einlauf in die Düse ein Quellvlies um den Strang aus (i) Papier und (ii) dem anderen, quellfähigen, flächigen oder runden Füllmaterial, Quellvlies und/oder Quellgarn gelegt und anschließend das erhaltene Gebilde durch Umwickeln mit dem Quellgarn fixiert. Das erfindungsgemäße Herstellungsverfahren hat den Vortell, dass die hergestellte Füllmaterialkordel sich hinsichtlich Masse und Durchmesser den Erfordernissen des zu füllenden Hohlraums, beispielsweise eines Kabelzwickels, genau anpassen lässt.

Die Herstellung der erfindungsgemäßen Füllmaterialkordel erfolgt üblicherweise auf einer handelsüblichen Spiralisiermaschine wie z. B von der Firma JBF in Hohentengen. Hierbei werden in einem gewünschten Verhältnis (i) Papier in Form von Streifen üblicherweise einer Breite von 10 mm - 300 mm und einer Breite von 150 mm und 250 mm und (ii) das andere, quellfähige, flächige oder runde Füllmaterial, Quellvlies und/oder Quellgarn zusammengeführt und durch eine Düse gezogen. Als Außenlage kann ein nicht leitendes oder leitendes Quellvlies um den Strang gelegt werden, wobei darauf zu achten ist, dass die Außenlage das Gebilde komplett abdeckt. Nach dem Einlauf in die Düse wird die erfindungsgemäße Füllmaterialkordel mit beilaufenden Quellgarnen (z.B. einem, zwei oder drei beilaufenden Quellgarnen) beispielsweise spiralförmig oder kreuzweise umwickelt, dadurch fixiert und kann danach auf eine vorgegebene Kabeltrommel aufgewickelt werden.

### Beispiel

Zur Herstellung einer halbleitenden erfindungsgemäßen Füllmaterialkordel mit einem Durchmesser von 20 mm zum Füllen und Abdichten eines Kabelzwickels von 265 mm2, werden 3 Streifen Papier der Bezeichnung KR 40 mit einer Breite von 250 mm und 1 Streifen Papier KR 40 mit einer Breite von 150 mm und 3 Streifen nicht leitendes Quellvlies mit der Bezeichnung GTST 20 mit einer Breite von 150 mm abwechselnd in ein Abzugsgatter eingehängt und in die Spiralisiermaschine mit einer Düsendurchmesser von 20,5 mm gezogen. Vor dem Einlauf in die Düse werden als Außenlage 2 halbleitende Quellvliesstreifen mit der Bezeichnung GTSB50 mit einer Breite von 80 mm so um den Strang gelegt, dass eine komplett abdeckende halbleitende Umhüllung entsteht. Direkt nach dem Aufbringen der Außenlage und dem Passieren der 20,5 mm Formdüse wird durch ein sich drehendes Karussell, auf dem 3 Spulen Quellgarn mit der Bezeichnung WPB 5000 aufgesteckt sind, die erfindungsgemäße Füllmaterialkordel mit dem Quellgarn spiralförmig auf einen Durchmesser von 20 mm fixiert. Nach dem Durchlaufen der Spiralisiermaschine wird die fertige Füllmaterialkordel auf 1000er Kabeltrommeln mittels einer Parallelverlegung bis etwa 5 cm unterhalb des Außenrandes der Kabeltrommel aufgewickelt.

## Patentansprüche

1. Füllmaterialkordel, die einen Kern aus (i) Papier und (ii) anderen, quellfähigen, flächigen oder runden Füllmaterialien, Quellvliesen und/oder Quellgarnen, optional ein Quellvlies als Umhüllung des Kerns sowie Quellgarn, das zur Fixierung des optional eine Umhüllung aufweisenden Kerns um diesen gewickelt ist, umfasst.

2. Füllmaterialkordel nach Anspruch 1, wobei das Papier eine Grammatur im Bereich von 5 bis 70 g/m² aufweist.

3. Füllmaterialkordel nach Anspruch 1 oder 2, die um den Kern aus (i) Papier und (ii) anderen, quellfähigen, flächigen oder runden Füllmaterialien, Quellvliesen und/oder Quellgarnen ein Quellvlies als Umhüllung aufweist.

4. Füllmaterialkordel nach Anspruch 1 oder 2, wobei das Verhältnis von (i) Papier zu (ii) den anderen, quellfähigen, flächigen oder runden Füllmaterialien, Quellvliesen und/oder Quellgarnen 20:80 bis 60:40 beträgt.

5. Füllmaterialkordel nach einem der vorhergehenden Ansprüche, die zu 20 bis 100 % aus Materialien besteht, die bei Zutritt von Wasser quellen.

6. Füllmaterialkordel nach einem der vorhergehenden Ansprüche, wobei die Füllmaterialkordel einen Durchmesser von 4 mm bis 140 mm, vorzugsweise 8 bis 80 mm aufweist.

7. Verfahren zur Herstellung einer Füllmaterialkordel nach einem der vorhergehenden Ansprüche, wobei das Verfahren die folgenden Stufen umfasst:
1) Hindurchziehen einer Mischung von (i) Papier in Streifenform und (ii) dem anderen, quellfähigen, flächigen oder runden Füllmaterial, Quellvlies und/oder Quellgarn durch eine Düse; und
2) anschließendes Fixieren des erreichten Durchmessers durch Umwickeln mit dem Quellgarn.

8. Verfahren nach Anspruch 7, wobei vor dem Hindurchziehen durch die Düse ein Quellvlies um den Strang aus (i) Papier und (ii) dem anderen, quellfähigen, flächigen oder runden Füllmaterial, Quellvlies und/oder Quellgarn gelegt und anschließend das erhaltene Gebilde mit Quellgarn fixiert wird.

9. Verwendung einer Füllmaterialkordel nach einem der Ansprüche 1 bis 6 zur Abdichtung von Kabelsträngen.

10. Verwendung einer Füllmaterialkordel nach Anspruch 9, wobei die Füllmaterialkordel dergestalt in Längsrichtung des Kabels angeordnet ist, dass sie die Höhlräume im Kabel ausfüllt.

## Claims

1. A filler cord comprising a core of (i) paper and (ii) other swellable, flat or round filler materials, swellable nonwovens, and/or swellable yarns; optionally a swellable nonwoven as a covering around the core; and, to secure the core, which may or may not comprise a covering, a swellable yarn, which is wrapped around the core.

2. A filler cord according to claim 1, wherein the paper comprises a grammage in the range of 5-70 g/m².

3. A filler cord according to claim 1 or claim 2, which comprises a swellable nonwoven as a covering around the core of (i) paper and (ii) other swellable, flat or round filler materials, swellable nonwovens, and/or swellable yarns.

4. A filler cord according to claim 1 or claim 2, wherein the ratio of (i) paper to (ii) the other swellable, flat or round filler materials, swellable nonwovens, and/or swellable yarns is in the range of 20:80 to 60:40.

5. A filler cord according to one of the preceding claims, 20-100% of which consists of materials which swell on contact with water.

6. A filler cord according to one of the preceding claims, wherein the filler cord comprises a diameter of 4-140 mm, and preferably of 8-80 mm.

7. A method for producing a filler cord according to one of the preceding claims, wherein the method comprises the following steps:
(1) pulling a mixture of (i) paper in the form of strips and (ii) the other, swellable, flat or round filler material, swellable nonwoven, and/or swellable yarn through a die; and then
(2) securing the diameter thus obtained by wrapping with the swellable yarn.

8. A method according to claim 7, wherein, before the mixture is pulled through the die, a swellable nonwoven is laid around the strand of (i) paper and (ii) the other, swellable, flat or round filler material, swellable nonwoven, and/or swellable yarn, and then the structure thus obtained is secured with swellable yarn.

9. The use of a filler cord according to one of claims 1-6 for sealing cable strands.

10. The use of a filler cord according to claim 9, wherein the filler cord is arranged in the longitudinal direction of the cable in such a way that it fills up the empty spaces in the cable.

## Revendications

1. Cordon de matériau de remplissage comprenant un noyau en (i) papier et (ii) d'autres matériaux de remplissage gonflants, planaires ou ronds, non-tissés gonflants et/ou fils gonflants, facultativement un non-tissé gonflant en tant qu'enveloppe du noyau, ainsi que du fil gonflant enroulé autour du noyau pour la fixation du .noyau comportant facultativement une enveloppe.

2. Cordon de matériau de remplissage selon la revendication 1, dans lequel le papier présente un grammage dans une fourchette de 5 à 70 g/m².

3. Cordon de matériau de remplissage selon la revendication 1 ou 2, comportant un non-tissé en tant qu'enveloppe autour du noyau, lequel est constitué de (i) papier et (ii) d'autres matériaux de remplissage gonflants, planaires ou ronds, non-tissés gonflants et/ou fils gonflants.

4. Cordon de matériau de remplissage selon la revendication 1 ou 2, dans lequel le rapport entre (i) le papier et (ii) les autres matériaux de remplissage gonflants, planaires ou ronds, non-tissés gonflants et/ou fils gonflants est compris entre 20:80 et 60:40.

5. Cordon de matériau de remplissage selon l'une des revendications précédentes, constitué de 20 à 100% de matériaux gonflant au contact de l'eau.

6. Cordon de matériau de remplissage selon l'une des revendications précédentes, dans lequel le cordon de matériau de remplissage présente un diamètre de 4 mm à 140 mm, de préférence de 8 à 80 mm.

7. Procédé pour la fabrication d'un cordon de matériau de remplissage selon l'une des revendications précédentes, dans lequel le procédé comprend les étapes suivantes :
1) Passage d'un mélange de (i) papier sous forme de bandes et (ii) de l'autre matériau de remplissage gonflant, planaire ou rond, non-tissé gonflant et/ou fil gonflant, à travers une filière ; et
2) Fixation consécutive du diamètre atteint par enroulement avec le fil gonflant.

8. Procédé selon la revendication 7, dans lequel, avant le passage à travers cette filière, un non-tissé gonflant est disposé autour du boudin constitué de (i) papier et (ii) de l'autre matériau de remplissage gonflant, planaire ou rond, non-tissé gonflant et/ou fil gonflant, puis la structure ainsi créée est fixée avec du fil gonflant.

9. Utilisation d'un cordon de matériau de remplissage selon l'une des revendications 1 à 6, pour l'étanchéité de faisceaux de câbles.

10. Utilisation d'un cordon de matériau de remplissage selon la revendication 9, dans laquelle le cordon de matériau de remplissage est disposé dans le sens longitudinal du câble, de manière à remplir les espaces creux du câble.
